# DEMANDE DE BREVET EUROPEEN

(11) **EP 0 871 123 A1**
(43) Date de publication de la demande: **14.10.1998**
(21) Numéro de dépôt: 98400869.8
(22) Date de dépôt: 09.04.1998
(51) Int. Cl.: G06F 11/14

(54) **Procédé de synchronisation de deux mémoires de masse réparties**

(30) Priorité: 10.04.1997 FR 9704406
(71) Demandeur: ALCATEL ALSTHOM COMPAGNIE GENERALE D'ELECTRICITE, 75008 Paris (FR)
(72) Inventeur: Ohayon, Gabriel, 91390 Morsang Sur Orge (FR)
(74) Mandataire: Lamoureux, Bernard

(57) **Abrégé**

Procédé de synchronisation de la mémoire de masse d'une station de secours par rapport à la mémoire de masse d'une station active après défaillance de ladite station de secours, caractérisé en ce que, à chaque modification d'une donnée, ladite station active mémorise une référence de ladite donnée dans une mémoire tampon, en ce qu'à la réception de la notification d'écriture de ladite donnée sur la mémoire de masse de ladite station de secours, ladite référence est supprimée, et en ce que pendant la phase de synchronisation, seules les données référencées dans ladite mémoire tampon sont transmises à ladite station de secours.

## Description

La présente invention conceme un procédé de sécurisation d'un serveur de fichiers dans un système distribué de traitement de l'information. Ce procédé peut s'appliquer, par exemple, aux réseaux de télécommunication, dont l'opérabilité doit être assurée de façon permanente.

La fonction de serveur de fichiers dans un environnement distribué consiste à mettre à la disposition des différentes stations du réseau, des données contenues dans une mémoire de masse de type disque dur.

Afin de prendre en compte les contraintes de sécurisation du serveur de fichier, on met habituellement en place des mécanismes de redondance. La solution habituelle consiste à dupliquer le service de serveur de fichiers sur deux stations distinctes. A un moment donné, une des deux stations est active, c'est-à-dire qu'elle offre effectivement les services de serveur de fichiers, tandis que l'autre est dite de secours (ou *stand-by).* En cas de défaillance de la station active, il y a basculement et la station de secours devient station active pour suppléer la station défaillante. Lorsque cette dernière redémarre, elle le fait en tant que station de secours.

Il est essentiel que les deux stations possèdent, à tout moment, des données identiques de sorte qu'en cas de défaillance de la station active ou de sa mémoire de masse, le basculement vers la station de secours se fasse de façon transparente pour l'ensemble de l'environnement et notamment pour les applications utilisant le serveur de fichiers.

Une première approche pour résoudre ce problème est d'avoir une duplication de type disques miroirs *(mirroring* en anglais) entre les deux mémoires de masse des deux stations. Un tel mécanisme consiste à gérer au niveau du matériel (pratiquement, au niveau de la carte contrôleur des mémoires de masse) la duplication des mémoires de masse. Chaque écriture est alors dupliquée sur les deux mémoires de masse, de sorte qu'en cas de défaillance de l'une des deux mémoires de masse, il reste possible d'avoir accès aux données identiques stockées dans l'autre mémoire de masse.

Cette approche peut toutefois s'avérer insuffisante dans certaines configurations, notamment lorsque les deux stations sont distantes. Un mécanisme de type disques miroirs n'est en effet plus possible du fait de l'éloignement des mémoires de masse.

Dans une telle configuration, il est nécessaire de mettre en oeuvre la duplication des données par l'intermédiaire du réseau reliant les différentes stations entre elles. Chaque fois que la station active écrit des données dans sa mémoire de masse, elle envoie à travers le réseau les données en question pour que la station de secours puisse mettre à jour sa propre mémoire de masse.

En cas de défaillance d'une des deux stations, les données ne sont plus modifiées que sur la station active. On a ainsi, peu à peu, divergence des contenues des deux mémoires de masse. Lors du redémarrage de la station défaillante (en tant que station de secours), il est alors nécessaire de remettre à jour (c'est-à-dire synchroniser) les données contenues dans sa propre mémoire de masse par rapport à celles de la station active.

Les solutions existantes consistent à recopier, de la station active vers la station de secours, la totalité du contenu des mémoires de masse ou, tout au moins, des partitions de la mémoire de masse contenant les données à sécuriser.

Une telle solution possède néanmoins deux inconvénients majeurs :
- La transmission du contenu d'une mémoire de masse ou d'une ou plusieurs partitions de celle-ci engendre un trafic supplémentaire sur le réseau qui peut être considérable et pénalisant pour les performances globales du système.
- Pendant toute la durée de la synchronisation des mémoires de masse, la station de secours n'est pas à même de remplir sa fonction, c'est-à-dire de pouvoir suppléer la station active en cas de défaillance de celle-ci.

Le but de la présente invention est de proposer une méthode de synchronisation des mémoires de masse exempte de ces deux inconvénients.

Pour cela, le procédé selon l'invention se caractérise :
- en ce qu'à chaque modification d'une donnée, la station active mémorise une référence de cette donnée dans une mémoire tampon,
- en ce qu'à la réception de la notification d'écriture de la donnée sur la mémoire de masse de la station de secours, la référence est supprimée,
- et en ce qu'après le rédémarrage de la station de secours, seules les données référencées dans la mémoire tampon sont transmises à la station de secours, et,
- les références contenues dans la mémoire tampon de ladite station de secours sont transmises à la station active qui les additionne au contenu de sa propre mémoire tampon.

Les différents avantages et caractéristiques de l'invention apparaîtront de façon plus claire dans la description qui va suivre en référence aux figures annexées.

La figure 1 indique un schéma général du système.

La figure 2 illustre un exemple de mise en oeuvre dans lequel la mémoire de masse est divisée en blocs de données et la mémoire tampon mets en correspondance un identifiant de chacun de ces blocs avec une valeur booléenne indiquant si le bloc a été modifié ou non.

L'architecture générale du système se compose d'au moins deux stations (1a et 1b) comportant chacune une mémoire de masse (respectivement 2a et 2b) et une mémoire tampon (respectivement 3a et 3b). Les stations sont liées entre elles par une connexion (4) classique, par exemple de type Ethernet.

Préférentiellement, la mémoire tampon est une mémoire non volatile, par exemple de type NVRAM *(Non Volatile Random Access Memory).* Une telle mémoire permet en effet de palier efficacement les déficiences de type panne d'alimentation, de la station active.

Cependant, le procédé selon l'invention est à même de fonctionner avec une mémoire volatile, en procédant à une synchronisation totale (i.e. à une recopie de l'ensemble de la mémoire de masse sécurisée) à la suite de chaque panne d'alimentation de la station active. Étant donné que ce type de pannes est généralement exceptionnel, une telle mise en oeuvre n'est pas réellement pénalisante.

Dans la description qui va suivre, on se place dans la configuration où la station référencée 1a est active tandis que la station référencée 1b est la station de secours.

A chaque fois que la station active (1a) modifie une donnée dans sa mémoire de masse (2a), elle envoie la donnée par le réseau 4 pour que la station de secours (1b) modifie de la même façon sa propre mémoire de masse (2b) et elle mémorise dans sa mémoire tampon (3a) une référence indiquant quelle donnée est en cours de modification. Lorsque la station de secours (1b) a effectivement modifié la donnée sur sa mémoire de masse (2b), elle transmet par le réseau 4, une notification d'écriture. A la réception de cette notification d'écriture, la station active (1a) efface de sa mémoire tampon (3a) la référence à la donnée modifiée.

En cas de défaillance de la station de secours (1b), les références à des données modifiées s'accumulent puisque la station de secours n'est plus à même de recevoir les données à modifier et *a fortiori* de transmettre des notifications d'écriture. A son redémarrage, la station active (1a) transmet par le réseau 4, l'ensemble des données correspondant aux références mémorisées dans la mémoire tampon (3a). Le fonctionnement normal peut alors reprendre et la station de secours (1b) transmet une notification d'écriture pour chacune de ces données de sorte que la station active (1a) puisse supprimer les références correspondantes de sa mémoire tampon (3a).

En cas de défaillance de la station active, il y a basculement et la station de secours (1b) devient la nouvelle station active. Comme dans la situation précédente, les références à des données modifiées s'accumulent dans la mémoire tampon (3b) jusqu'au redémarrage en tant que station de secours de l'ancienne station active.

Il est à noter que cette dernière ayant été station active, elle peut posséder des références à données modifiées dans sa mémoire tampon (3a) : il s'agit là des données en cours de modification au moment de la défaillance (les données ont été transmises vers l'autre station mais la notification d'écriture n'a pas été reçue). Dans ce cas, elle transmet à destination de la nouvelle station active (1b), le contenu de sa mémoire tampon (3a) afin que cette nouvelle station active additionne ce contenu à celui de sa propre mémoire tampon (3b) qui contient bien ainsi l'ensemble des données potentiellement différentes entre les deux mémoires de masse (2a et 2b).

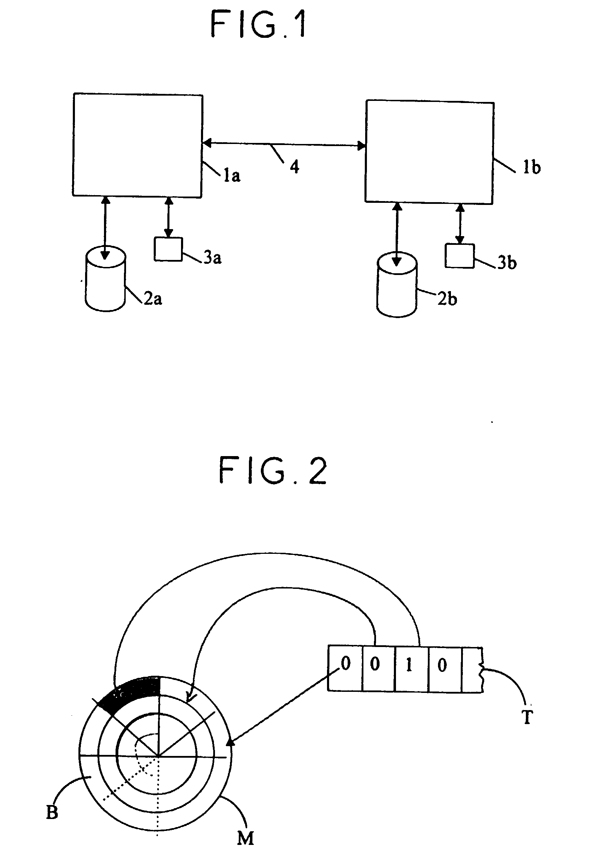

La figure 2 illustre un exemple de structure de données pour mémoriser dans la mémoire tampon, les références aux données modifiées

Dans cette mises en oeuvre, la mémoire de masse (M) est divisée en plusieurs blocs de données (B). A chacun de ces blocs (B), correspond dans la mémoire tampon (T) un *bit,* c'est-à-dire un élément binaire prenant, une valeur particulière si une donnée a été modifiée dans le bloc correspondant, et la valeur logiquement opposée si le bloc n'a pas été modifié. On a ainsi dans la mémoire tampon, une cartographie du contenu de la mémoire de masse.

Chaque modification d'une donnée entraîne la modification de l'élément binaire correspondant au bloc contenant cette donnée. Cet élément binaire est mis à une valeur particulière, par exemple 1. Lorsque la station active reçoit la notification d'écriture de la part de la station de secours, cet élément binaire est mis à la valeur opposée, c'est-à-dire 0 selon notre exemple.

Pendant la synchronisation, la station active transmet le contenu des blocs qui ont été modifiés et pour lesquels la notification d'écriture n'a pas été reçu, c'est-à-dire ceux pour lesquels l'élément binaire correspondant est à la valeur particulière (1 selon l'exemple).

Le mécanisme d'addition des mémoires tampons décrit précédemment s'implémente aisément avec une telle structure de données puisqu'il suffit d'effectuer une addition binaire sous la forme d'un ou logique, *bit* par *bit* entre les deux contenus.

## Revendications

1. Procédé de synchronisation de la mémoire de masse d'une station de secours par rapport à la mémoire de masse d'une station active après défaillance de ladite station de secours, chacune desdites stations possédant une mémoire tampon, caractérisé en ce que, à chaque modification d'une donnée, ladite station active mémorise une référence de ladite donnée dans sa mémoire tampon, en ce qu'à la réception de la notification d'écriture de ladite donnée sur la mémoire de masse de ladite station de secours, ladite référence est supprimée, et en ce qu'au redémarrage de ladite station de secours, seules les données référencées dans ladite mémoire tampon sont transmises à ladite station de secours, et les références contenues dans la mémoire tampon de ladite station de secours sont transmises à ladite station active qui les additionne au contenu de sa propre mémoire tampon.

2. Procédé selon la revendication précédente, caractérisé en ce que ladite mémoire tampon est une mémoire non volatile, par exemple de type NVRAM.

3. Procédé selon l'une des revendications précédentes, dans lequel ladite mémoire de masse est divisé en blocs, caractérisé en ce que ladite mémoire tampon contient une cartographie de ladite mémoire de masse dans laquelle on fait correspondre un élément binaire à chacun desdits blocs, en ce que la mémorisation de ladite référence consiste à mettre à une valeur particulière (par exemple 1) l'élément binaire correspond au bloc contenant ladite donnée, en ce que la suppression de ladite référence consiste à remettre ledit élément binaire à la valeur opposé (par exemple 0) et en ce qu'au rédémarrage de ladite station de secours, seul le contenu des blocs dont l'élément binaire correspondant est à ladite valeur particulière, est transmis à ladite station de secours.
